# FASCICULE DE BREVET EUROPEEN

(11) **EP 1 521 020 B1**
(45) Date de publication et mention de la délivrance du brevet: **17.01.2007**
(21) Numéro de dépôt: 04300614.7
(22) Date de dépôt: 20.09.2004
(51) Int. Cl.: F16J 15/32, B25B 27/00

(54) **Dispositif de protection pour joint d'étanchéité et procédé de montage d'un arbre de boîte de vitesses**
Dichtungsschutzvorrichtung und Montageverfahren einer Getriebewelle
Seal protection device and mounting method for a gear-box shaft

(30) Priorité: 30.09.2003 FR 0311429
(43) Date de publication de la demande: 06.04.2005
(73) Titulaire: Renault s.a.s., 92100 Boulogne Billancourt (FR)
(72) Inventeur: Castex, Estelle, 76240 Bonsecours (FR); Lecarpentier, Eric, 76140 Petit Quevilly (FR); Petit, Sébastien, 27920 St.Etienne sous Bailleul (FR)
(74) Mandataire: Rougemont, Bernard

(56) Documents cités:
- GB-A- 2 242 241

## Description

La présente invention concerne la protection des joints d'étanchéité à lèvres et le montage des arbres de boîtes de vitesses.

Plus précisément, elle concerne un dispositif de protection pour le joint d'étanchéité d'un tube guide d'arbre de boîte de vitesses, situé dans le carter d'embrayage de celle-ci.

Ce dispositif vise à protéger la lèvre d'étanchéité du joint d'étanchéité à lèvre d'un arbre de boîte de vitesses mécanique, lors du montage de cet arbre dans la boîte.

L'invention concerne aussi un procédé de montage d'un arbre de boîte de vitesses mécanique, tel qu'un arbre primaire, reposant sur l'utilisation du dispositif de protection proposé.

Par la publication GB 2242 241, on connaît un dispositif pour protéger un joint d'étanchéité élastique de boîte de vitesses, lors du montage de l'arbre primaire dans celle-ci. Ce dispositif, de forme tubulaire, est disposé à l'intérieur du tube guide de l'arbre primaire dans le carter, avant le montage de l'arbre. Lors du montage, l'arbre est introduit à l'intérieur du dispositif de protection. Lorsqu'il arrive en butée à l'extrémité de celui-ci, l'arbre le repousse et l'expulse du tube. A l'issue du montage, l'arbre repose donc à l'intérieur du tube guide, et le dispositif de protection a été évacué : le dispositif de protection a ainsi servi à protéger les moyens d'étanchéité du tube guide, lors de l'introduction de l'arbre dans celui-ci.

Toutefois, le dispositif de protection décrit dans la publication GB 2242 241 ne protège pas le roulement du tube guide, car ce dispositif est plus court que le tube guide. L'arbre peut ainsi heurter la cage ou les rouleaux en passant devant ceux-ci, et en entraîner des éclats, qui pourront détériorer le joint d'étanchéité.

Le dispositif connu peut aussi être repoussé par l'arbre, notamment si ce dernier a été présenté en biais par l'opérateur : l'arbre entre alors directement en contact avec la lèvre du joint et détériore celle-ci, Avec ce dispositif, l'extrémité du protecteur n'est pas visible par l'opérateur.

L'invention a pour but de remédier à ces inconvénients,

Dans ce but, elle propose que le dispositif de protection s'étende jusqu'à l'extrémité du tube guide par laquelle l'arbre est introduit dans le carter.

De préférence, ce dispositif présente au moins une première position de montage, dans laquelle il s'étend entre les deux extrémités du tube guide, et une seconde position de fonctionnement, dans laquelle il est repoussé par l'arbre à l'extérieur du tube guide.

Un autre inconvénient du dispositif connu provient de la nécessité de soulever l'arbre primaire après son montage et après évacuation du protecteur, pour permettre l'assemblage de l'axe de marche arrière, avant de le remettre en place dans un second temps, alors que le joint à lèvre, n'est plus protégé et peut être agressé par les cannelures de l'arbre.

L'invention a aussi pour but de remédier à cet inconvénient.

Elle propose à cet effet de maintenir le dispositif de protection en position intermédiaire, avant de monter l'axe de marche arrière, puis d'enfoncer l'arbre en position de fonctionnement en repoussant le dispositif de protection.

D'autres caractéristiques et avantages de l'invention apparaîtront à la lecture de la description suivante d'un mode de réalisation particulier de celle-ci, en se référant aux dessins annexés, sur lesquels:
- la figure 1 est une coupe partielle d'une boîte de vitesses et du mécanisme d'embrayage associé à celle-ci,
- les figures 2A à 2E montrent des vues extérieures et en coupe du dispositif proposé,
- la figure 3 montre l'implantation du dispositif dans le tube,
- la figure 4 montre l'arbre en position de montage,
- la figure 5 montre l'arbre en position de fonctionnement, avant l'élimination du dispositif de protection, et
- les figures 6 et 7 illustrent un second mode de réalisation de l'invention en position de montage (figure 6), et en position intermédiaire (figure 7).

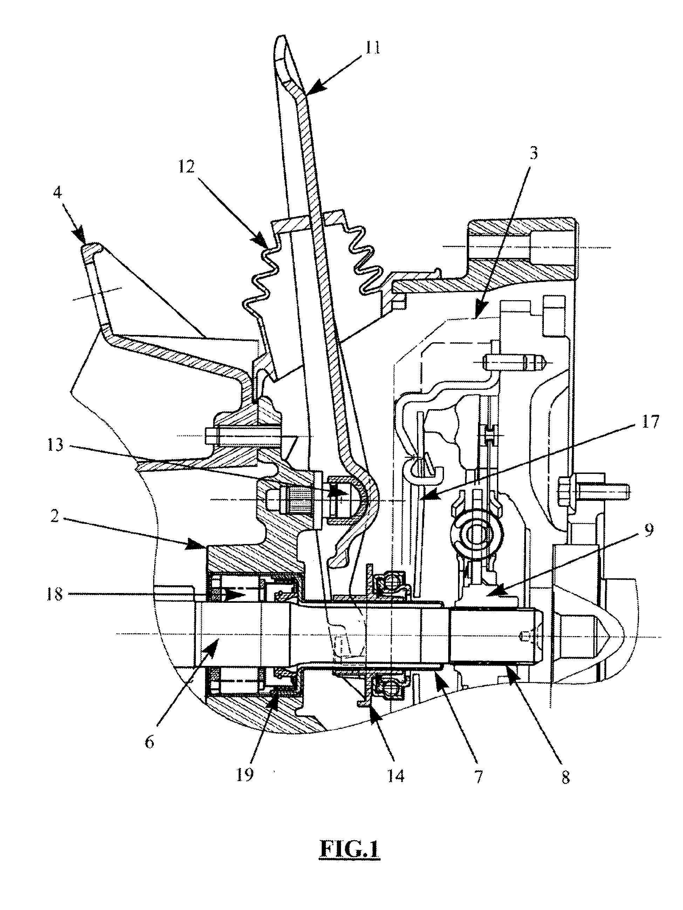

La figure 1 montre le carter d'embrayage et de différentiel 2, le mécanisme d'embrayage 3, et le carter de mécanisme 4 d'une boîte de vitesses mécanique. L'arbre primaire de boîte 6 est monté à l'intérieur d'un tube guide 7 traversant le carter d'embrayage 2, et est engagé par des cannelures d'extrémité 8 dans le moyeu d'embrayage 9.

La figure 1 montre aussi la fourchette d'embrayage 11 dépassant à l'extérieur du soufflet de protection 12, qui peut basculer autour de son pivot 13 pour repousser la butée d'embrayage 14. La butée 14, montée autour du tube 7, se déplace le long de celui-ci sous la poussée de la fourchette 11 ou du diaphragme 17.

Le tube 7 s'étend jusqu'à proximité du moyeu 9. Il est traversé de part en part par l'arbre 6. Il porte d'une part ses moyens de roulement 18 dans le carter d'embrayage 2, tels qu'une douille à rouleaux, et d'autre part un joint d'étanchéité à lèvre 19.

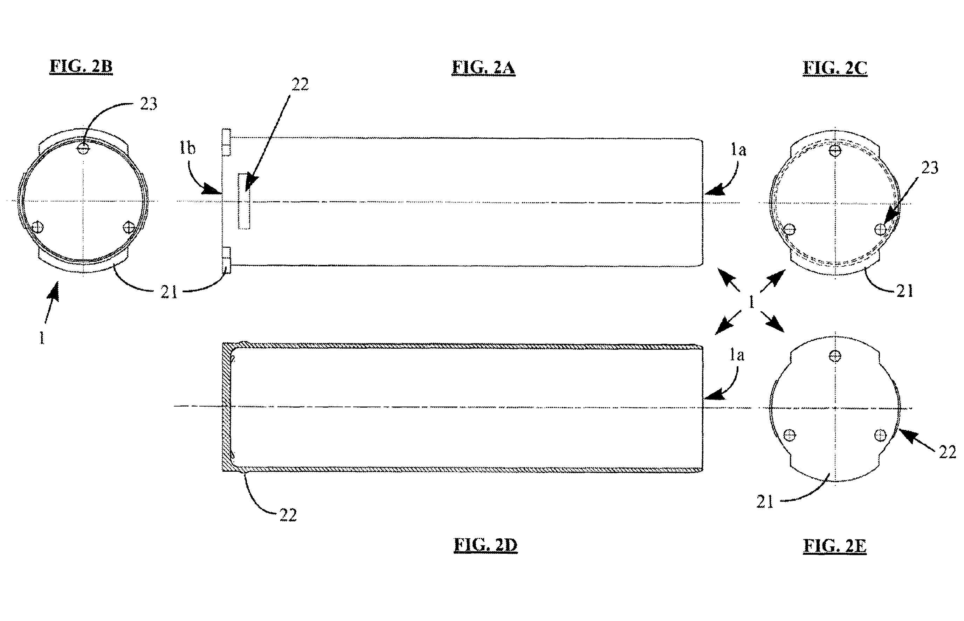

La figure 1 n'est pas limitative du type d'arbre, du type d'embrayage, de commande d'embrayage ou de la forme du tube guide associé au dispositif de protection. La fonction de ce dispositif, visible sur les figures 2A à 2E est de protéger le joint à lèvre 19 et la douille à rouleaux 18 vis à vis de l'arbre 6, lors de l'introduction de ce dernier dans le tube 7, avant d'être expulsé.

Les figures 2A à 2E sont respectivement une vue latérale extérieure, une vue frontale extérieure de la première extrémité 1a du dispositif 1, une vue extérieure de sa seconde extrémité 1b, une coupe axiale, et une autre vue extérieure de l'extrémité 1b. Ces figures mettent en évidence la forme tubulaire du dispositif, dont la première extrémité 1a est l'ouverture d'introduction de l'arbre et la seconde extrémité 1b est obturée. Le dispositif 1 porte des ergots de retenue 22 à l'intérieur du tube, trois orifices ou « évents » 23 permettant l'évacuation de l'air lors de l'introduction de l'arbre, et des pattes de positionnement 21 vis à vis du tube.

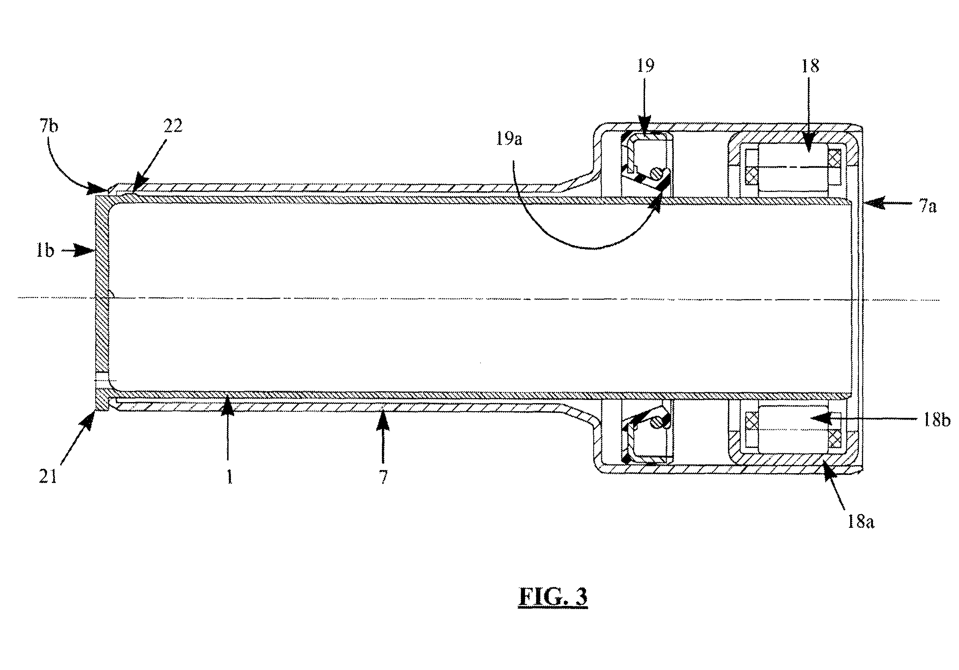

Sur la figure 3, le dispositif 1 est monté à l'intérieur du tube guide 7, portant les moyens de roulement 18 de l'arbre (cage 18a et rouleaux 18b) et le joint d'étanchéité 19 avec sa lèvre d'étanchéité 19a. La longueur du dispositif de protection correspond à celle du tube 7, et il s'étend entre les deux extrémités 7a et 7b de celui-ci, positionné grâce à l'appui des pattes 21 contre l'extrémité 7b du tube, et retenu à l'intérieur de celui-ci par les ergots 22. Le dispositif 1 est en position dite de montage, en attente de l'introduction de l'arbre, est visible par l'opérateur 7, de manière à interdire tout contact entre l'arbre 6 et ses moyens de roulement 18 dans le tube 7 lors du montage.

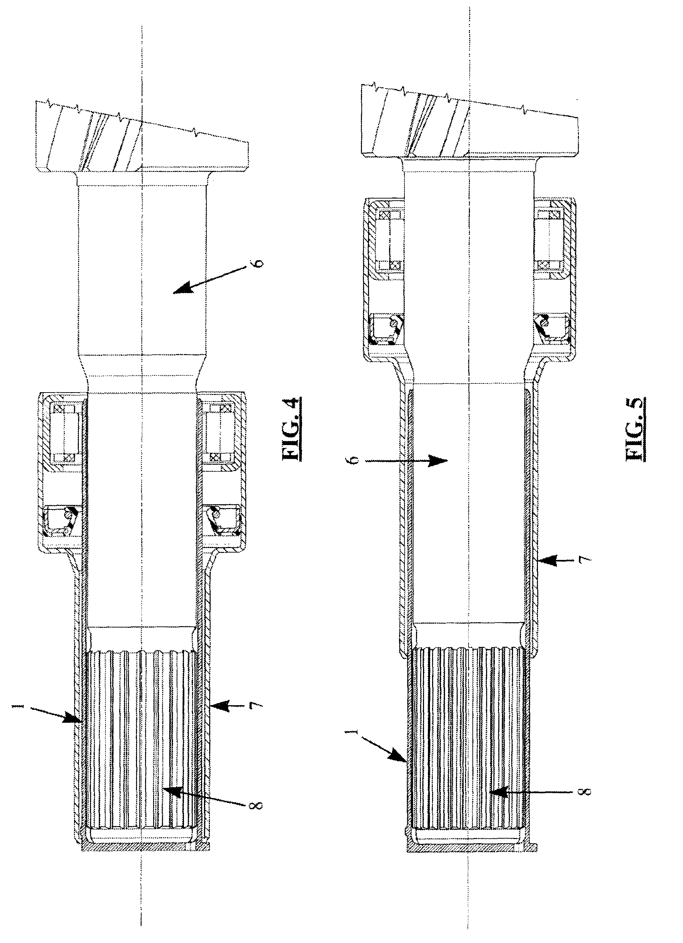

Sur la figure 4, où l'arbre 6 a été introduit et placé dans sa position de montage, le dispositif 1 ne s'est pas déplacé vis à vis du tube 7.

Sur la figure 5, le dispositif 1 est dans sa seconde position, avant d'être évacué définitivement. Dans cette seconde position, l'arbre a été repoussé par l'opérateur à l'intérieur du tube 7 en entraînant avec lui le dispositif de protection. Cette position est donc sa position définitive de fonctionnement où l'arbre peut recevoir le moyeu d'embrayage 9 sur ses cannelures, conformément à la figure 1.

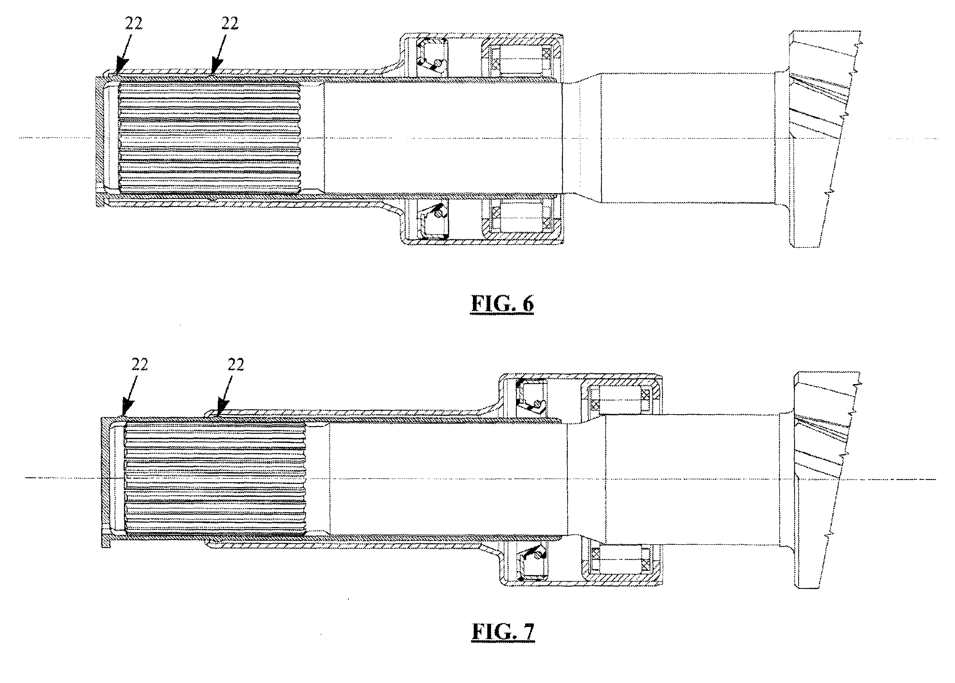

Enfin, les figures 6 et 7 illustrent un second mode de réalisation de l'invention, dans lequel le dispositif présente deux séries d'ergots 22, la première le retenant en position de montage de l'arbre, et la seconde le retenant en position intermédiaire de l'arbre.

Les ergots 22 sont des moyens non limitatifs de retenue du dispositif 1 dans la position de montage à l'intérieur du tube guide 7. Comme indiqué plus haut, cette position est conservée jusqu'à l'enfoncement de l'arbre 6 par l'opérateur dans sa position de fonctionnement.

Ces moyens sont donc provisoires. Ils empêchent la sortie du dispositif 1 hors du tube 7 tant qu'il ne reçoit pas une poussée suffisante de la part de l'arbre. Selon un mode de réalisation préféré non limitatif de l'invention, les ergots 22 (ou d'autres moyens de retenue non décrits), sont dimensionnés pour que l'effort nécessaire pour les pousser à l'extérieur du tube guide, soit dans un premier temps suffisant pour assurer le transport et le montage du tube guide (première rangée d'ergots) et dans un deuxième temps supérieur au poids de l'arbre de manière à résister à ce poids (deuxième rangée d'ergots).

Les ergots 22 permettent de placer dans un premier temps l'arbre 6 dans la position intermédiaire (« position haute » s'il est introduit verticalement dans un carter présenté à l'horizontale) où il est retenu par le dispositif de protection 1. En effet, si les moyens de retenue provisoires sont dimensionnés pour résister au poids de l'arbre, on peut attendre d'avoir mis en place un autre arbre coaxial dans la boîte, par exemple l'axe de marche arrière, pour forcer le passage de la deuxième rangée d'ergots hors du tube guide. Dans cette position intermédiaire, la lèvre du joint est encore protégée par le dispositif.

Le montage de l'arbre dans la boîte peut ainsi s'effectuer de la façon suivante :
- mise en place de l'arbre dans le tube guide avec déplacement du dispositif de protection à l'intérieur du tube guide pour arriver en position intermédiaire,
- montage de l'axe de marche arrière,
- enfoncement de l'arbre en position de fonctionnement avec poussée du dispositif de protection à l'extérieur du tube guide.

Dans la description ci-dessus, il n'est fait référence qu'à un arbre primaire de boîte de vitesses. Toutefois, cette description ne porte que sur un mode de réalisation particulier de l'invention, et n'a aucun caractère limitatif quant à la disposition et à la fonction de l'arbre concerné. Ainsi, le dispositif de protection et le procédé proposés ne concernent pas exclusivement le montage d'un arbre primaire, mais s'appliquent dans des conditions analogues au montage d'autres arbres de boîte.

En conclusion, il faut souligner que l'alignement initial du de l'ouverture du tube et du dispositif, empêche la mise en biais de l'arbre dans le tube, et interdit tout contact entre l'arbre et les moyens de roulement lors de son introduction. Le rallongement du dispositif de protection jusqu'à l'ouverture du tube est donc garant de la protection des rouleaux et de la cage de roulement, comme du joint d'étanchéité. Enfin, la présence des ergots de retenue permet de maintenir l'arbre en position haute pour faciliter le montage d'un autre arbre coaxial, tel que l'axe de marche arrière, un effort supplémentaire sur l'arbre permettant alors de dégager les ergots et d'évacuer le dispositif de protection, pour permettre à l'arbre de trouver sa position définitive de fonctionnement dans la boîte.

## Revendications

1. Dispositif de protection (1) pour joint d'étanchéité (19) d'un tube guide (7) d'arbre (6) de boîte de vitesses situé dans le carter d'embrayage (2) de celle-ci, **caractérisé en ce qu'**il s'étend, lorsqu'il est monté dans celui-ci, jusqu'a l'extrémité (7a) du tube guide (7) par laquelle l'arbre (6) est introduit.

2. Dispositif de protection (1) selon la revendication 1, **caractérisé en ce qu**'il présente au moins une première position de montage, dans laquelle il s'étend entre les deux extrémités (7a, 7b) du tube guide (7), et une seconde position de fonctionnement, dans laquelle il est repoussé par l'arbre (6) à l'extérieur du tube guide (7).

3. Dispositif de protection (1) selon la revendication 2, **caractérisé en ce que** son ouverture (1a) est visible par l'opérateur (7), de manière à interdire tout contact entre l'arbre (6) et ses moyens de roulement (18) dans le tube (7) lors du montage.

4. Dispositif de protection (1) selon la revendication 1, 2 ou 3, **caractérisé en ce qu**'il présente des moyens de retenue provisoires (22) dans le tube (7).

5. Dispositif de protection (1) selon la revendication 4 **caractérisé en ce que** les moyens de retenue provisoires (22) sont constitués par au moins un ergot extérieur.

6. Dispositif de protection (1) selon la revendication 5, **caractérisé en ce qu**'il comporte deux séries d'ergots (22) distantes l'une de l'autre.

7. Dispositif de protection selon la revendication 6, **caractérisé en ce que** les deux séries d'ergots (22) permettent respectivement de le retenir en position de montage et en position intermédiaire de l'arbre.

8. Dispositif de protection (1) selon la revendication 6 ou 7, **caractérisé en ce que** la deuxième rangée d'ergots est dimensionnée de manière à résister au poids de l'arbre.

9. Procédé de montage d'un arbre (6) de boîte de vitesses munie d'un dispositif de protection conforme à l'une des revendications précédentes, **caractérisé en ce qu**'il comporte les étapes suivantes :
- mise en place de l'arbre (6) dans le tube (7) avec déplacement du dispositif de protection à l'intérieur du tube guide, pour arriver en position intermédiaire,
- montage de l'axe de marche arrière,
- enfoncement de l'arbre (6) en position de fonctionnement avec poussée du dispositif de protection (1) à l'extérieur du tube (7).

## Claims

1. Protection device (1) for a seal (19) for a guide tube (7) for a gear-box shaft (6) situated in the gear-box clutch housing (2), **characterized in that** it extends, when mounted in it, as far as the end (7a) of the guide tube (7) through which the shaft (6) is introduced.

2. Protection device (1) according to Claim 1, **characterized in that** it has as a minimum a first or mounting position in which it extends between the two ends (7a, 7b) of the guide tube (7), and a second or operating position in which it is pushed out of the guide tube (7) by the shaft (6).

3. Protection device (1) according to Claim 2, **characterized in that** its opening (1a) is visible to the operator, in such a way as to prevent any contact between the shaft (6) and its rolling-bearing means (18) inside the tube (7) during assembly.

4. Protection device (1) according to Claim 1, 2 or 3, **characterized in that** it has provisional retention means (22) in the tube (7).

5. Protection device (1) according to Claim 4, **characterized in that** the provisional retention means (22) consist of at least one external nub.

6. Protection device (1) according to Claim 5, **characterized in that** it comprises two series of nubs (22) distant from each other.

7. Protection device according to Claim 6, **characterized in that**, of the two series of nubs (22), one enables it to be retained in the mounting position, and the other in the intermediate position of the shaft.

8. Protection device (1) according to Claim 6 or 7, **characterized in that** the second row of nubs is designed so that it withstands the weight of the shaft.

9. Method of mounting a shaft (6) of a gearbox provided with a protection device in accordance with one of the preceding claims, **characterized in that** it comprises the following steps:
- the shaft (6) is placed in the tube (7), the protection device being moved into the guide tube until it reaches the intermediate position,
- the reverse idler shaft is fitted, and
- the shaft (6) is pushed into the operating position such that the protection device (1) is pushed out of the tube (7).

## Patentansprüche

1. Schutzvorrichtung (1) für die Dichtung (19) eines im Getriebegehäuse (2) angeordneten Führungsrohres (7) einer Getriebewelle (6), **dadurch gekennzeichnet, dass** sie sich im Einbauzustand im Führungsrohr (7) bis zu dessen Ende (7a), an dem die Welle (6) eingeführt wird, erstreckt.

2. Schutzvorrichtung (1) nach Anspruch 1, **dadurch gekennzeichnet, dass** sie mindestens eine erste Einbaulage, in der sie sich zwischen zwei Enden (7a, 7b) des Führungsrohres (7) erstreckt, und eine zweite Funktionslage aufweist, in der sie von der Welle (6) aus dem Führungsrohr (7) gedrückt wird.

3. Schutzvorrichtung (1) nach Anspruch 2, **dadurch gekennzeichnet, dass** ihre Öffnung (1a) für den Bediener (7) sichtbar ist, sodass sich die Welle (6) und deren Lagermittel (18) im Rohr (7) nicht berühren können.

4. Schutzvorrichtung (1) nach Anspruch 1, 2 oder 3, **dadurch gekennzeichnet, dass** sie provisorische Haltemittel (22) im Rohr (7) aufweist.

5. Schutzvorrichtung (1) nach Anspruch 4, **dadurch gekennzeichnet, dass** die provisorischen Haltemittel (22) aus mindestens einem äußeren Vorsprung bestehen.

6. Schutzvorrichtung (1) nach Anspruch 5, **dadurch gekennzeichnet, dass** sie zwei voneinander beabstandete Reihen Vorsprünge (22) aufweist.

7. Schutzvorrichtung (1) nach Anspruch 6, **dadurch gekennzeichnet, dass** sie mit den beiden Reihen Vorsprünge (22) jeweils in der Einbaulage und in der Zwischenlage der Welle gehalten werden kann.

8. Schutzvorrichtung (1) nach Anspruch 6 oder 7, **dadurch gekennzeichnet, dass** die zweite Reihe Vorsprünge so dimensioniert ist, dass sie dem Gewicht der Welle standhält.

9. Verfahren für den Einbau einer Getriebewelle (6) mit einer Schutzvorrichtung nach einem der vorhergehenden Ansprüche, **dadurch gekennzeichnet, dass** es sich aus den folgenden Schritten zusammensetzt:
- Einführen der Welle (6) in das Rohr (7) mit Verschieben der Schutzvorrichtung im Innern des Führungsrohres bis in die Zwischenlage,
- Einbau der Rückwärtsgangwelle,
- Eindrücken der Welle (6) in die Funktionslage mit Herausdrücken der Schutzvorrichtung (1) aus dem Rohr (7).
